# EUROPÄISCHE PATENTSCHRIFT

(11) **EP 3 245 054 B1**
(45) Veröffentlichungstag und Bekanntmachung des Hinweises auf die Patenterteilung: **24.04.2019**
(21) Anmeldenummer: 16819794.5
(22) Anmeldetag: 28.10.2016
(51) Int. Cl.: B30B 15/30, B32B 38/18

(54) **VORRICHTUNG UND VERFAHREN ZUR PRESSENBESCHICKUNG**
DEVICE AND METHOD FOR CHARGING A PRESS
DISPOSITIF ET PROCÉDÉ D'ALIMENTATION DE PRESSE

(30) Priorität: 30.10.2015 DE 102015118603
(43) Veröffentlichungstag der Anmeldung: 22.11.2017
(73) Patentinhaber: Wemhöner Surface Technologies GmbH & Co. KG, 32052 Herford (DE)
(72) Erfinder: BARTH, Florian, 32130 Enger (DE); BERGHAHN, Uwe, 32760 Detmold (DE)
(74) Vertreter: Rolf, Gudrun
(86) Internationale Anmeldenummer: PCT/DE2016/100508
(87) Internationale Veröffentlichungsnummer: WO 2017/071694

(56) Entgegenhaltungen:
- EP-A1- 2 796 293
- DE-A1-102005 009 835
- DE-A1-102007 022 733

## Beschreibung

Die Erfindung betrifft eine Vorrichtung und ein Verfahren zur hochgenauen Pressenbeschickung von in einer Presse mit strukturierten Pressblechen porengenau zur oberen und unteren Dekorschicht zu verpressenden Werkstückstapeln gemäß den Oberbegriffen der Ansprüche 1 und 10.

Bekannt ist ein Verfahren und eine Vorrichtung zum deckungsgleichen Ablegen von aus Dekorfolien und Trägerplatten bestehenden Presspaketen, DE 10 2005 009 835 A1, bei denen ein Werkstückstapel in einer Ausrichtstation vor einer Presse ausgerichtet und danach an die Beschickvorrichtung übergeben wird, die ihn in die Presse einfährt und auf der unteren Pressplatte ablegt.

Nachteilig an diesem vorbekannten Verfahren und der bekannten Vorrichtung ist insbesondere, dass zunächst die Ausrichtung der Werkstückstapel durchgeführt wird und erst dann die Übergabe an die Beschickvorrichtung erfolgt, sodass hier wieder Positionierungsfehler auftreten können.

Aufgabe der Erfindung ist es, eine Vorrichtung und ein Verfahren zur hochgenauen Pressenbeschickung zur Verfügung zu stellen, bei dem eine fehlerhafte Positionierung in einer Presse vollständig ausgeschlossen werden kann.

Die Lösung dieser Aufgabe erfolgt in Verbindung mit den Oberbegriffsmerkmalen der Ansprüche 1 und 10 erfindungsgemäß im Zusammenwirken mit deren kennzeichnenden Merkmalen.

Die Beschickvorrichtung besteht erfindungsgemäß aus in Förderrichtung beidseitig der zusammengelegten Werkstückstapel angeordneten Längsführungen, die sich durch die Presse und daraus heraus bis in den Entladebereich erstrecken, auf denen jeweils voneinander unabhängig angetriebene Schlitten geführt sind, die Vertikalführungen für jeweils unabhängig voneinander darauf angeordnete verschwenkbare Schwenkarme aufweisen, die mit Klemmleisten zur Aufnahme der Werkstückstapel ausgestattet sind.

Diese Konstruktion erlaubt es in erfinderischer Art und Weise die Ausrichtung der Werkstückstapel in geklemmten Zustand durchzuführen, der bis zum Ablegen in der Presse beibehalten werden kann, sodass sich zwischen einer Ausrichtstation und einer Beschickvorrichtung keine Positionsungenauigkeiten einschleichen können, wie dies beim Stand der Technik möglich ist. Die neue Ausführungsform dieser Beschickvorrichtung ermöglicht eine beliebige Ausrichtung der Werkstückstapel in alle horizontalen Richtungen, sodass eine hochgenaue Pressenbeschickung porengenau zu den strukturierten Pressblechen möglich wird. Dies führt durch das direkte Ausrichten während der Beschickung nicht nur zu einer Zeitersparnis, sondern es entstehen auch keine Positionierungsfehler bei der Aufnahme des Produktes, da dessen Position erst nach der Aufnahme in den beidseitigen Klemmleisten gemessen wird. Da weiterhin eine unmittelbare Ausrichtung der geklemmten Werkstückstapel bzw. deren oberen und unteren Dekorschichten zu den Prägeblechen erfolgt, können auch Fehler durch falsche Lage der Prägebleche in der Presse weitestgehend minimiert oder sogar vollständig ausgeschlossen werden. Ein weiterer Vorteil der einzelnen und voneinander vollkommen unabhängigen Schlitten besteht darin, dass auch das Gesamtgewicht der Beschickvorrichtung drastisch verringert ist, sodass auf Grund der geringeren zu beschleunigenden Massen auch eine schnellere Beschickung und Entleerung der Presse möglich ist, ebenso wie dadurch eine Energieersparnis erzielt werden kann, da weniger leistungsfähige Antriebe benötigt werden.

Gegenüber anderen bekannten Beschickungsvorrichtungen mit großen einteiligen Beschickwagen, von denen sich immer ein Abschnitt in einer Presse und ein andere Abschnitt zum Beschicken mit nachfolgend zu verpressenden Werkstückstapeln oder zum Entladen fertig verpresster Werkstücke außerhalb der Presse befindet, führt diese vorteilhafte Vorrichtung weiterhin dazu, dass die jeweils aus einer Presse herausragenden Seiten eines solchen Beschickwagens weder während des Entleerens noch während des Beschickens zu einer Beeinflussung des Positionierungsergebnisses der in der Beschickung befindlichen Werkstückstapel führen können. Ein weiterer wesentlicher Vorteil besteht darin, dass die Beschickvorrichtung zu Wartungsarbeiten einer Presse komplett aus der Presse herausgefahren werden kann, ebenso wie die Entladevorrichtung, sodass die Presse erheblich besser zugänglich ist. Des Weiteren verringern sich auch die Rüstzeiten der Presse, da die Lage der Prägebleche zu den Presstischen nicht mehr so entscheidend ist, da mittels der erfinderischen Beschickvorrichtung die Position der Werkstückstapel einfach an die tatsächliche Lage der Prägebleche angepasst werden kann. Dies führt insgesamt zu einer deutlich gesteigerten Prozessleistung, ebenso wie die Genauigkeit der Fertigprodukte erheblich gesteigert werden kann.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform der Erfindung sind die Schlitten mit elektrischen Linearantrieben ausgestattet, mit jeweils einer Magnetschiene als Stator im Bereich der Längsführung und einem Primärteil als Forcer im Schlitten, wobei die Primärteile bevorzugt im Endbereich der Schlitten angeordnet sind, die stets außerhalb der Presse bleiben und somit keiner Wärmebeeinflussung durch die Pressplatten ausgesetzt sind. Diese Linearantriebe ermöglichen eine hochgenaue Positionierung der Schlitten, die zusätzlich mit einem Wegmesssystem ausgestattet sind.

Bei einer vorteilhaften Variante können die Schlitten alternativ auch mittels elektrischer Motoren über Riemen oder Zahnriemen angetrieben werden, welche den Vorteil besitzen, dass die Schlitten damit sehr gut beschleunigt, vor allen Dingen aber sehr stark abgebremst werden können, wodurch sich die Wirtschaftlichkeit des damit durchführbaren Verfahrens weiter steigern lässt.

Ganz besonders vorteilhaft ist des Weitern eine Kombination der Schlittenantriebe aus elektrischen Linearantrieben und Riemen oder Zahnriemenantrieben, bei der eine mögliche, wenn auch nur geringe elastische Schwingungsanregung beim Bremsen bei durch Riemen angetriebenen Schlitten von den Linearantrieben verhindert wird.

Entsprechend einer weiteren vorteilhaften Ausführungsform der Erfindung sind je zu verpressendem Werkstückstapel je Seite mindestens zwei Schwenkarme je Schlitten und je zwei Schlitten je Werkstückstapel vorgesehen, wobei bei mehreren gleichzeitig zu verpressenden Werkstückstapeln die Schlitten als Teilschlitten ausgebildet sind, die entweder jeweils einen eigenen elektrischen Linearantrieb aufweisen oder die miteinander so gekoppelt sind, dass die Abstände der Werkstückstapel motorisch verstellbar ausgebildet sind, um weiterhin ein individuelles Positionieren der einzelnen Werkstückstapel unter den Pressblechen einer Presse zu gewährleisten.

Gemäß einer besonders bevorzugten Ausgestaltung der erfinderischen Vorrichtung ist jeder Schwenkarm mit einem separaten Schwenkmotor ausgestattet und jeder Schwenkarm samt Schwenkmotor an einem Vertikalschlitten auf einer Vertikalführung angeordnet und separat höhenverstellbar ausgebildet, sodass auch das Ablegen von Werkstückstapeln in einer Presse optimiert werden kann.

Das mit der Vorrichtung durchführbare Verfahren zum hochgenauen Pressenbeschicken von in einer Presse mit strukturierten Pressblechen porengenau zu oberen und unteren Dekorschichten zu verpressenden Werkstückstapeln verläuft derart, dass ein Werkstückstapel in Transportrichtung beidseitig zwischen den Klemmleisten aufgenommen und fixiert wird, eine optische Messvorrichtung die Lage des Werkstückstapels bestimmt und in Bezug zur Position der Presse oder der Pressbleche setzt, woraufhin der Werkstückstapel vor und/ oder während des Beschickvorganges in die Presse durch eine Ausrichtsteuerung zu den Pressblechen ausgerichtet und der Werkstückstapel passgenau in der Presse auf dem unteren Presstisch abgelegt und dort verpresst wird, nachdem die Schlitten wieder aus der Presse herausgefahren oder zumindest die Schwenkarme seitlich zwischen den Presstischen herausgefahren wurden.

Nach dem Öffnen der Presse fahren im Wesentlichen identisch ausgebildete Entnahmeschlitten in die Presse ein und heben mittels eingeschwenkter Schwenkarme, die mit Saugleisten ausgestattet sind, das fertige Werkstück an und transportieren es aus der Presse heraus, wobei jedes fertige Werkstück von einer optischen Messvorrichtung auf Fehler überprüft wird und erforderlichenfalls Korrekturwerte an einen der Presse vorgeschalteten Legebereich, die Beschickvorrichtung und/ oder an die Ausrichtsteuerung weitergegeben werden, die bei nachfolgenden Pressenzyklen berücksichtigt werden. Das Entladeverfahren läuft dabei vollkommen unabhängig vom Beschickvorgang ab, wobei die Konstruktion mit separat verschwenkbaren Schwenkarmen es weiter vorteilhaft ermöglicht, zum Entladen kürzerer Werkstücke die nicht benötigten Schwenkarme nicht mit einzuschwenken, sondern seitlich der Presstische ausgeschwenkt zu halten, sodass diese nicht freischwebend das Ziehen von Vakuum verhindern oder auf dem unteren Presstisch zur Auflage kommen und so die gewünschte Funktion behindern.

Nachfolgend ist eine Ausführungsform der Vorrichtung anhand von Zeichnungen näher beschrieben. Es zeigen:
- Fig. 1: eine skizzierte Draufsicht auf die Vorrichtung mit Beschickvorrichtung, Presse und Entladevorrichtung,
- Fig. 2: eine teilweise geschnittene Seitenansicht der Beschickvorrichtung und
- Fig. 3-5: geklemmte Werkstückstapel in unterschiedlichen Ablagepositionen über einem unteren Pressblech.

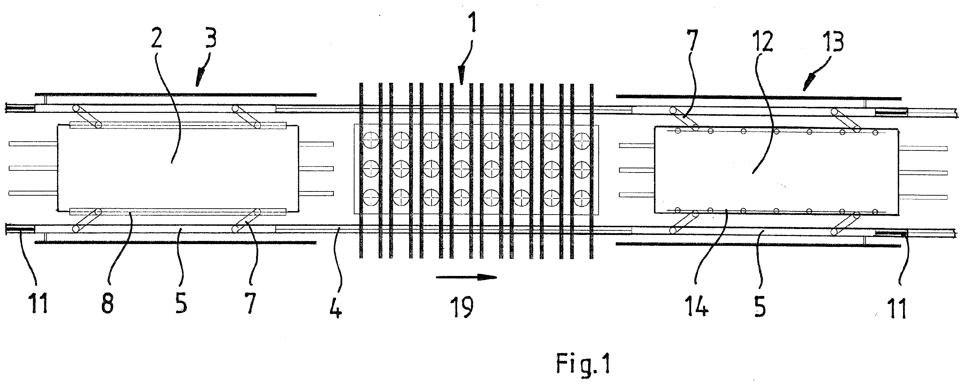

Wie in Fig. 1 dargestellt, ist die Vorrichtung mit beidseitigen Längsführungen 4 ausgestattet, die sich von der Beschickvorrichtung 3 durch die Presse 1 bis zur Entladevorrichtung 13 erstrecken, von denen linksseitig vor der Presse 1 die Beschickvorrichtung 3 gezeigt ist und rechtsseitig neben der Presse 1 die Entladevorrichtung 13, wobei Beschick- und Entladevorrichtung 3; 13 jeweils voneinander unabhängige Schlitten 5 aufweisen, die jeweils mit separaten Linearantrieben 11 ausgestattet sind, auf denen Vertikalführungen 6 für Schwenkarme 7 angeordnet sind, die in der Beschickvorrichtung 3 mit Klemmleisten 8 ausgestattet sind und in der Entladevorrichtung 13 mit Saugleisten 14.

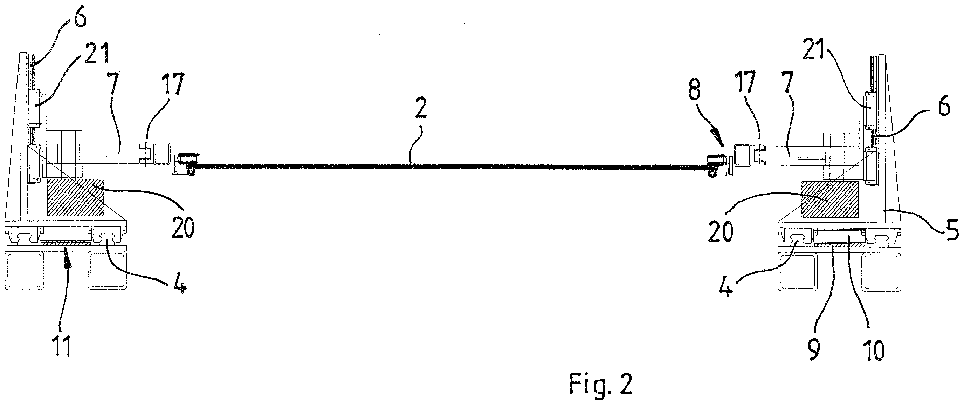

Die Linearantriebe 11 weisen, wie in Fig. 2 gezeigt ist, Magnetschienen 9 als Statoren auf, die entlang der Längsführungen 4 verlaufen, wobei die Primärteile bzw. die Forcer der Linearantriebe 11 so angeordnet sind, dass sie stets außerhalb der Presse 1 und somit unabhängig von Temperatureinflüssen bleiben. Der Werkstückstapel 2, der in der Beschickvorrichtung 3 geklemmt ist, lässt sich durch die freie Beweglichkeit der Schlitten 5 und der von separaten Schwenkmotoren 20 bewegten Schwenkarmen 7 im geklemmten Zustand passend zu den Pressblechen in der Presse 1 positionieren, wobei die dazu erforderlichen und vorhandenen optischen Messvorrichtungen zeichnerisch nicht dargestellt sind, ebenso wenig wie diejenigen der Entladevorrichtung 13, die das fertige Werkstück 12 auf Fehler überprüfen und erforderlichenfalls Korrekturwerte an den der Presse 1 vorgelagerten Legebereich, die Beschickvorrichtung 3 und/ oder deren Ausrichtsteuerung weitergeben. Jeder der Schwenkarme 7 ist zusammen mit seinem Schwenkmotor 20 an einem Vertikalschlitten 21 auf einer Vertikalführung 6 angeordnet und separat ansteuerbar höhenverstellbar ausgebildet.

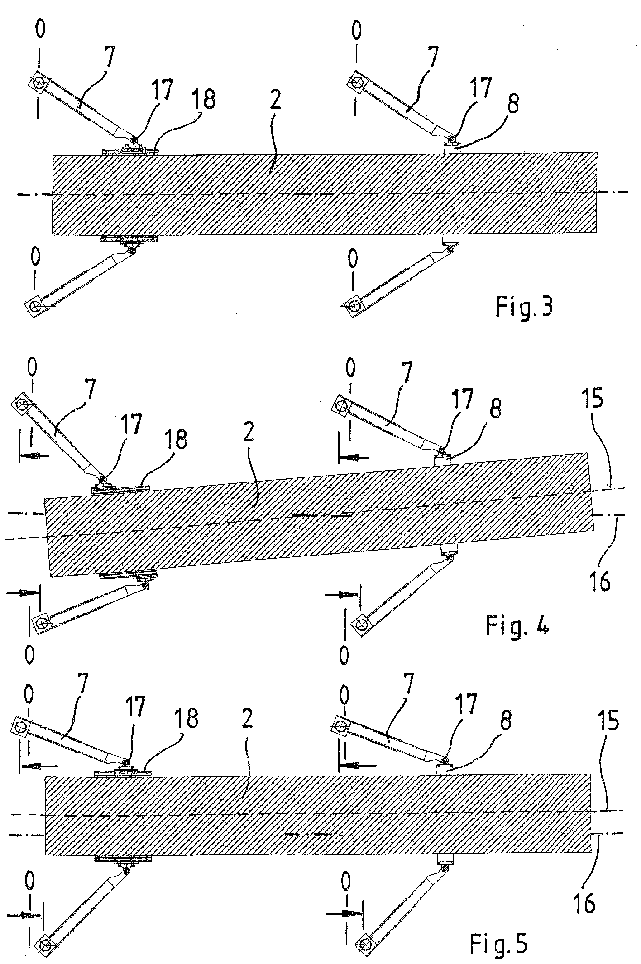

In den Fig. 3-5 sind mögliche Positionen des Werkstückstapels 2 im geklemmten Zustand dargestellt, wobei Fig. 3 eine Mittellage darstellt, in der die Mittellängsachse 15 des Werkstückstapels 2 genau mit der Mittellängsachse 16 der Presse 1 übereinstimmt, wohingegen in Fig. 4 ein deutlicher Winkelversatz der Mittellängsachse 15 des Werkstückstapels 2 zu der Mittellängsachse 16 der Presse 1 dargestellt ist, wozu auch die Schwenkarme 7 auf ihren Schlitten 5 gegeneinander verfahren werden, wobei hier der in Förderrichtung 19 linke Schlitten 5 entgegen der Förderrichtung 19 nach links und der rechte Schlitten 5 in Förderrichtung 19 nach rechts verschoben dargestellt ist.

Der Werkstückstapel 2, wie er in der Fig. 5 dargestellt ist, weist eine parallele Abweichung der Mittellängsachse 15 des Werkstückstapels 2 zur Mittellängsachse 16 der Presse 1 auf, wobei auch hier die Schlitten 5 in unterschiedliche Richtungen zur Förderrichtung 19 bewegt sind, wie dies, wie auch in Fig. 4, durch Pfeile gekennzeichnet ist, die eine Abweichung zu einer Ausgangslage, wie sie in Fig. 3 dargestellt ist, veranschaulichen.

## Patentansprüche

1. Vorrichtung zur hochgenauen Pressenbeschickung von in einer Presse (1) mit strukturierten Pressblechen porengenau zu oberen und unteren Dekorschichten zu verpressenden Werkstückstapeln (2), mit einer Beschickvorrichtung (3) für die Presse (1), **dadurch gekennzeichnet, dass** die Beschickvorrichtung (3) aus beidseitig der zusammengelegten Werkstückstapel (2) angeordneten Längsführungen (4) besteht, auf denen jeweils voneinander unabhängig angetriebene Schlitten (5) geführt sind, die Vertikalführungen (6) für jeweils unabhängig voneinander verschwenkbare Schwenkarme (7) aufweisen, die mit Klemmleisten (8) zur Aufnahme der Werkstückstapel (2) ausgestattet sind.

2. Vorrichtung nach Anspruch 1, **dadurch gekennzeichnet, dass** die Schlitten (5) als elektrische Linearantriebe (11) ausgebildete Schlittenantriebe aufweisen, mit je einer Magnetschiene (9) als Stator, die auf jeder Längsführung (4) angeordnet ist und mit jeweils einem Primärteil (10) als Forcer des Linearantriebes im Schlitten (5).

3. Vorrichtung nach Anspruch 2, **dadurch gekennzeichnet, dass** die Primärteile (10) jeweils in den Endbereichen der Schlitten (5) angeordnet sind und sich in jeder Position der Beschickvorrichtung außerhalb der Presse (1) befinden.

4. Vorrichtung nach Anspruch 1, **dadurch gekennzeichnet, dass** die Schlitten (5) mittels elektrischer Motoren über Riemen oder Zahnriemen angetrieben sind.

5. Vorrichtung nach den vorgenannten Ansprüchen 2 und 4, **dadurch gekennzeichnet, dass** die Schlittenantriebe aus einer Kombination von elektrischen Linearantrieben (11) und Riemen- oder Zahnriemenantrieben bestehen.

6. Vorrichtung nach einem der vorgenannten Ansprüche, **dadurch gekennzeichnet, dass** jeder Schlitten (5) mit einem Wegmesssystem ausgestattet ist.

7. Vorrichtung nach einem der vorgenannten Ansprüche, **dadurch gekennzeichnet, dass** je Werkstückstapel (2) je Seite mindestens zwei Schwenkarme (7) an jeweils zwei separat beweglichen Schlitten (5) vorgesehen sind.

8. Vorrichtung nach einem der vorgenannten Ansprüche, **dadurch gekennzeichnet, dass** jeder Schwenkarm (7) mit einem separaten Schwenkmotor (20) ausgestattet und jeder Schwenkarm (7) samt Schwenkmotor (20) an einem Vertikalscnlitten (21) auf einer Vertikalführung (6) angeordnet und separat höhenverstellbar ausgebildet ist.

9. Vorrichtung nach Anspruch 8, **dadurch gekennzeichnet, dass** sie für mehrere gleichzeitig zu verpressende Werkstückstapel (2) mit hintereinander angeordneten Teilschlitten mit jeweils mindestens zwei Schwenkarmen (7) ausgestattet ist und die Teilschlitten jeder Seite in ihren gegenseitigen Abstand motorisch gegeneinander verstellbar ausgebildet sind, um ein individuelles Positionieren jedes einzelnen Werkstückstapels (2) in der Presse (1) zu gewährleisten.

10. Verfahren zur hochgenauen Pressenbeschickung von in einer Presse (1) mit strukturierten Pressblechen porengenau zu oberen und unteren Dekorschichten zu verpressenden Werkstückstapeln (2) mit einer Vorrichtung gemäß einem der vorgenannten Ansprüche, wobei ein Werkstückstapel (2) in Transportrichtung (19) beidseitig zwischen den Klemmleisten (8) der jeweils unabhängig voneinander verschwenkbaren Schwenkarme (7) aufgenommen und fixiert wird, eine Messeinrichtung die Lage des Werkstückstapels (2) bestimmt und in Bezug zur Position der Presse (1) oder der Pressbleche setzt, woraufhin der Werkstückstapel (2) vor und/ oder während des Beschickvorganges zur Presse (1) oder zu den Pressblechen durch eine Ausrichtsteuerung ausgerichtet wird, woraufhin der Werkstückstapel (2) passgenau in der Presse (1) abgelegt und dort verpresst wird, nachdem der Schlitten (5) wieder aus der Presse (1) herausgefahren wurde.

11. Verfahren nach Anspruch 10, **dadurch gekennzeichnet, dass** jedes fertige Werkstück (12) mittels einer optischen Messvorrichtung auf Fehler überprüft wird und erforderlichenfalls Korrekturwerte an einen der Presse (1) vorgeschalteten Legebereich, die Beschickvorrichtung und/ oder die Ausrichtsteuerung weitergegeben werden, die bei nachfolgenden Pressenzyklen berücksichtigt werden.

12. Verfahren nach einem der vorgenannten Ansprüche 10 oder 11, **dadurch gekennzeichnet, dass** eine Entladevorrichtung (13) ebenfalls separate seitliche Schlitten (5) mit Schwenkarmen (7) und Aufnahmen aufweist, die als Saugleisten (14) ausgebildet sind und dass der Beschickvorgang unabhängig vom Entladevorgang abläuft.

13. Verfahren nach Anspruch 12, **dadurch gekennzeichnet, dass** zum Entladen von zur wirksamen Länge der Pressbleche kürzeren Werkstücken (12) nicht benötigte Schwenkarme (7) seitlich der Pressbleche der Presse (1) vollständig ausgeschwenkt gehalten werden.

## Claims

1. Device for the high-precision charging of a press with stacks (2) of workpieces that are to be pressed in a press (1) with structured pressing plates with pore accuracy with respect to upper and lower decorative layers, having a charging device (3) for the press (1), **characterized in that** the charging device (3) consists of longitudinal guides (4) which are arranged on both sides of the assembled stacks (2) of workpieces and on which slides (5) that are driven in each case independently of one another are guided, said slides (5) having vertical guides (6) for pivot arms (7) that are pivotable in each case independently of one another and are equipped with clamping strips (8) for receiving the stacks (2) of workpieces.

2. Device according to Claim 1, **characterized in that** the slides (5) have slide drives in the form of electric linear drives (11), with in each case one magnetic rail (9) as stator, said rail (9) being arranged on each longitudinal guide (4), and with in each case one primary part (10) as forcer of the linear drive in the slide (5).

3. Device according to Claim 2, **characterized in that** the primary parts (10) are each arranged in the end regions of the slides (5) and are located outside the press (1) in each position of the charging device.

4. Device according to Claim 1, **characterized in that** the slides (5) are driven by means of electric motors via belts or toothed belts.

5. Device according to the preceding Claims 2 and 4 **characterized in that** the slide drives consist of a combination of electric linear drives (11) and belt or toothed-belt drives.

6. Device according to one of the preceding claims, **characterized in that** each slide (5) is equipped with a position measuring system.

7. Device according to one of the preceding claims, **characterized in that**, on each side of each stack (2) of workpieces, at least two pivot arms (7) are provided on in each case two separately movable slides (5).

8. Device according to one of the preceding claims, **characterized in that** each pivot arm (7) is equipped with a separate pivot motor (20), and each pivot arm (7), together with the pivot motor (20), is arranged on a vertical slide (21) on a vertical guide (6) and configured to be separately vertically adjustable.

9. Device according to Claim 8, **characterized in that** it is equipped with in each case at least two pivot arms (7) for a plurality of stacks (2) of workpieces that are to be pressed simultaneously and have part-slides arranged one after another, and the part-slides of each side are configured to be adjustable with respect to one another in terms of mutual spacing by means of a motor, in order to ensure individual positioning of each individual stack (2) of workpieces in the press (1).

10. Method for the high-precision charging of a press with stacks (2) of workpieces that are to be pressed in a press (1) with structured pressing plates with pore accuracy with respect to upper and lower decorative layers, using a device according to one of the preceding claims, wherein a stack (2) of workpieces is received and fixed between the clamping strips (8) of the pivot arms (7) that are pivotable in each case independently of one another on both sides in the direction of transport (19), a measuring device determines the position of the stack (2) of workpieces and sets it in relation to the position of the press (1) or of the pressing plates, whereupon the stack (2) of workpieces is oriented with respect to the press (1) or to the pressing plates by an orientation controller before and/or during the charging operation, whereupon the stack (2) of workpieces is deposited with a precise fit in the press (1) and is pressed therein, after the slide (5) has been withdrawn from the press (1) again.

11. Method according to Claim 10, **characterized in that** each finished workpiece (12) is checked for errors by means of an optical measuring device and any correction values are passed on to a positioning region upstream of the press (1), to the charging device and/or to the orientation controller, which are taken into consideration in subsequent pressing cycles.

12. Method according to either of the preceding Claims 10 and 11, **characterized in that** an unloading device (13) likewise has separate lateral slides (5) with pivot arms (7) and receptacles, which are in the form of suction strips (14), and **in that** the charging operation proceeds independently of the unloading operation.

13. Method according to Claim 12, **characterized in that**, for unloading workpieces (12) that are shorter than the effective length of the pressing plates, pivot arms (7) that are not required are kept in a manner pivoted out fully to the side of the pressing plates of the press (1).

## Revendications

1. Dispositif d'alimentation très précise de presse avec des piles de pièces (2) à presser dans une presse (1) avec des tôles de pressage structurées à pores exactement repérés pour des couches décoratives supérieure et inférieures, avec un dispositif d'alimentation (3) pour la presse (1), **caractérisé en ce que** le dispositif d'alimentation (3) se compose de guides longitudinaux (4) disposés de part et d'autre de la pile de pièces constituée (2), sur lesquels sont guidés des chariots (5) entraînés chaque fois indépendamment l'un de l'autre, qui présentent des guides verticaux (6) pour des bras pivotants (7) pouvant pivoter chaque fois indépendamment l'un de l'autre, qui sont équipés de barres de serrage (8) destinées à contenir la pile de pièces (2).

2. Dispositif selon la revendication 1, **caractérisé en ce que** les chariots (5) présentent des entraînements de chariot constitués par des entraînements électriques linéaires (11), comportant chacun un rail magnétique (9) comme stator, qui est disposé sur chaque guide longitudinal (4) et avec chacun une partie primaire (10) comme forceur de l'entraînement linéaire dans le chariot (5).

3. Dispositif selon la revendication 2, **caractérisé en ce que** les parties primaires (10) sont disposées respectivement dans les régions d'extrémité des chariots (5) et se trouvent dans chaque position du dispositif d'alimentation à l'extérieur de la presse (1).

4. Dispositif selon la revendication 1, **caractérisé en ce que** les chariots (5) sont entraînés au moyen de moteurs électriques par des courroies ou des courroies dentées.

5. Dispositif selon les revendications précédentes 2 et 4, **caractérisé en ce que** les entraînements de chariot se composent d'une combinaison d'entraînements électriques linéaires (11) et d'entraînements par courroie ou par courroie dentée.

6. Dispositif selon l'une quelconque des revendications précédentes, **caractérisé en ce que** chaque chariot (5) est équipé d'un système de mesure de course.

7. Dispositif selon l'une quelconque des revendications précédentes, **caractérisé en ce qu'**il est prévu par pile de pièces (2) et par côté au moins deux bras pivotants (7) sur chaque fois deux chariots (5) mobiles séparément.

8. Dispositif selon l'une quelconque des revendications précédentes, **caractérisé en ce que** chaque bras pivotant (7) est équipé d'un moteur de pivotement séparé (20) et chaque bras pivotant (7) avec le moteur de pivotement (20) sur un chariot vertical (21) est disposé sur un guide vertical (6) et est réglable en hauteur séparément.

9. Dispositif selon la revendication 8, **caractérisé en ce qu'**il est équipé, pour plusieurs piles de pièces (2) à presser simultanément, de chariots partiels disposés l'un derrière l'autre avec chacun au moins deux bras pivotants (7) et les chariots partiels de chaque côté peuvent être déplacés au niveau de leur distance mutuelle l'un par rapport à l'autre de façon motorisée, afin de garantir un positionnement individuel de chaque pile de pièces individuelle (2) dans la presse (1).

10. Procédé d'alimentation très précise de presse avec des piles de pièces (2) à presser dans une presse (1) avec des tôles de pressage structurées à pores exactement repérés pour des couches décoratives supérieures et inférieures avec un dispositif selon l'une quelconque des revendications précédentes, dans lequel on place et on fixe une pile de pièces (2) dans la direction de transport (19) de part et d'autre entre les barres de serrage (8) des bras pivotants (7) pouvant chaque fois pivoter indépendamment l'un de l'autre, un dispositif de mesure détermine la position de la pile de pièces (2) et la définit par rapport à la position de la presse (1) ou des tôles de pressage, puis on oriente la pile de pièces (2) avant et/ou pendant l'opération d'alimentation par rapport à la presse (1) ou par rapport aux tôles de pressage au moyen d'une commande d'orientation, on dépose ensuite la pile de pièces (2) de manière ajustée dans la presse (1) et on la presse dans celle-ci, après que le chariot (5) ait été de nouveau emmené hors de la presse (1).

11. Procédé selon la revendication 10, **caractérisé en ce que** l'on contrôle les défauts de chaque pièce terminée (12) au moyen d'un dispositif de mesure optique et on transmet si nécessaire à une section de placement précédant la presse (1), au dispositif d'alimentation et/ou au dispositif d'orientation, des valeurs de correction dont on tient compte pour les cycles de presse suivants.

12. Procédé selon une des revendications précédentes 10 ou 11, **caractérisé en ce qu'**un dispositif de déchargement (13) présente également des chariots latéraux séparés (5) avec des bras pivotants (7) et des logements, qui sont formés par des barres aspirantes (14), et **en ce que** l'opération d'alimentation se déroule indépendamment de l'opération de déchargement.

13. Procédé selon la revendication 12, **caractérisé en ce que** pour le déchargement de pièces (12) plus courtes que la longueur utile des tôles de pressage, les bras pivotants (7) non nécessaires sont maintenus complètement écartés sur le côté des tôles de pressage de la presse (1).
